# EUROPÄISCHE PATENTSCHRIFT

(11) **EP 2 703 117 B1**
(45) Veröffentlichungstag und Bekanntmachung des Hinweises auf die Patenterteilung: **02.11.2016**
(21) Anmeldenummer: 13177988.6
(22) Anmeldetag: 25.07.2013
(51) Int. Cl.: B23P 6/02

(54) **Verfahren zur Rekonditionierung einer Zylinderanordnung einer Hubkolbenbrennkraftmaschine**
Method for restoring a cylinder assembly of a reciprocating piston combustion engine
Procédé de reconditionnement d'un agencement de cylindre d'un moteur à combustion à piston élévateur

(30) Priorität: 03.09.2012 EP 12182772
(43) Veröffentlichungstag der Anmeldung: 05.03.2014
(73) Patentinhaber: Wärtsilä Schweiz AG, 8401 Winterthur (CH)
(72) Erfinder: Mäder, Roger, 9500 Wil SG (CH); Räss, Konrad, 8457 Humlikon (CH); Reynolds, James, 8400 Winterthur (CH)
(74) Vertreter: Intellectual Property Services GmbH

(56) Entgegenhaltungen:
- EP-A1- 0 592 179
- CN-A- 101 559 550
- US-A- 2 365 725
- US-A- 2 752 668

## Beschreibung

Die Erfindung betrifft ein Verfahren zur Rekonditionierung einer Zylinderanordnung einer Hubkolbenbrennkraftmaschine, insbesondere längsgespülter Zweitakt-Grossdieselmotor gemäss dem Oberbegriff des unabhängigen Anspruchs 1.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten im Zylinderliner solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit. Damit kommt der komplexen Problematik des Kolbenlaufverhaltens von Grossdieselmotoren eine immer grössere Bedeutung zu.

Bekanntermassen sind dabei die Belastungen, denen der Zylinderliner im Betriebszustand ausgesetzt ist, im oberen Bereich des Zylinderliners, also dort wo der Kolben in der Nähe des Zylinderdeckels im Betriebszustand den oberen Totpunkt durchläuft, besonders gross. In der Nähe der oberen Totpunkt Position des Kolbens, also wenn das von Zylinderliner, Zylinderdeckel und Kolben eingeschlossene Volumen des Brennraums ungefähr minimal ist, wird das Luft Brennstoffgemisch gezündet. Es wirken dadurch hohe Temperaturen und Drücke im Zylinderliner, die zudem nicht zuletzt aufgrund der Bewegung des Kolbens und des sich damit ständig verändernden dynamischen Volumens des Brennraums, auch starken dynamischen Änderungen unterliegen.

Durch den enormen Verbrennungsdruck im Brennraum, der auch massgebend für die Reibung zwischen Kolbenringlauffläche und Zylinderlineroberfläche ist und die mit der Verbrennung bzw. der Bewegung des Kolbens einhergehenden enormen Druckschwankungen im Brennraum, erfährt der Zylinderliner, nicht nur, aber insbesondere an seinem oberen Ende, wo im Betriebszustand die Verbrennung im Brennraum startet, einen besonders starken Verschleiss.

Der besonders hohe Verschleiss im Bereich des oberen Torpunkts wird zusätzlich noch dadurch gefördert, dass der Kolben in der Nähe des oberen Totpunkts mit verhältnismässig kleiner Geschwindigkeit entlang der Lauffläche des Zylinderliners läuft und im oberen Totpunkt sogar die Geschwindigkeit null hat und seine Bewegungsrichtung hin zum unteren Totpunkt umkehrt. Unter diesen Bedingungen kann sich nur sehr schwer ein ausreichender Schmierfilm zwischen den Kolbenringen des Kolbens und der Lauffläche des Zylinderliners ausbilden. Der Schmierfilm ist of nicht von ausreichender Qualität und kann sogar zumindest lokal oder zeitweise verschwinden, und es kann sich ein Zustand der "Grenzreibung" oder "Mischreibung" einstellen, so dass es in diesen Bereichen zu einem "Metall auf Metall Kontakt" kommen kann, wodurch sich natürlich aufgrund der hohen Reibungskräfte unter solchen Bedingungen ein besonders starker abrasiver Verschleiss, nicht nur an der Zylinderlauffläche einstellen kann.

Im Fall von sehr hohen Temperatur- und Druckbelastungen in Verbindung mit einem zumindest lokal nicht vorhandenen oder z.B. durch chemische Substanzen beschädigten Schmierötfilm, oft in Zusammenhang mit den unter hohen Temperaturen stattfinden schädlichen Korrosionsvorgängen, kommt es somit regelmässig zu den erwähnten abrasiven Verschleisszuständen auch an der Zylinderwand des Zylinderliners.

Da die zuvor geschilderten Verschleissmechanismen an der Lauffläche des Zylinderliners in Richtung zum oberen Totpunkt hin immer intensiver werden, wird auch bei einer gegebenen Anzahl von Betriebsstunden der Verschleiss entlang der Zylinderachse in Richtung zum oberen Totpunkt hin immer stärker.

Als Folge dessen, weicht die Form der Lauffläche im Inneren des Zylinderliners mit zunehmenden Betriebszustunden und damit mit zunehmendem Verschleiss immer mehr von der streng zylindrischen Form eines Innenzylinders ab und nimmt mit zunehmender Betriebsdauer immer deutlicher eine im wesentlichen "trompetenartige" Form an. Das heisst, nach einer vorgegebenen Betriebsdauer ist die innere Form des Zylinderliner durch die zuvor beschriebenen Verschleissvorgänge derart verändert, dass der Innendurchmesser mit Annäherung an den oberen Totpunkt zunehmend grösser wird. Die innere Form der Lauffläche des Zylinderliners ähnelt zunehmend mehr der einer Trompete, als er der Form eines idealen Innenzylinders entspricht. Solche Formabweichungen können je nach Betriebszustand auch an anderen Stellen entlang der Zylinderlauffläche auftreten, so dass der Zylinderdurchmesser entlang der Lauffläche variieren kann. Diese Probleme wurden teilweise schon früher erkannt und z.B. in der US 2,365,725 oder der EP 0592 179 A1 adressiert.

Der Fachmann versteht sofort, dass dies nicht nur die Reibungsverhältnisse auf der Zylinderlauffläche im Bereich des oberen Totpunkts zusätzlich verschlechtert, sondern letztlich auch den Verbrennungsvorgang und damit den gesamten Betrieb des Motors negativ beeinflussen kann. In letzter Konsequenz führt dies natürlich zu höheren Betriebskosten und kann im schlimmsten Fall auch die Betriebssicherheit und damit beispielsweise sogar die Sicherheit einer mit dem Motor betriebenen Anlage, z.B. die Sicherheit eines Schiffes negativ beeinträchtigen, was selbstverständlich in jedem Fall verhindert werden muss. Daher müssen bisher beispielweise die entsprechenden Zylinderliner vorzeitig gewartet bzw. ausgetauscht werden, was natürlich letztlich zu einer deutlichen Erhöhung der Betriebskosten führt.

Die Aufgabe der Erfindung ist es daher, ein neues Verfahren zur Rekonditionierung einer Zylinderanordnung einer Hubkolbenbrennkraftmaschine, insbesondere längsgespülter Zweitakt-Grossdieselmotor bereitzustellen, mit dem die aus dem Stand Technik bekannten Probleme so rechtzeitig vermieden werden können, dass eine insgesamt längere Standzeit der Zylinderliner gewährleistet ist, d.h. dass die Zylinderliner deutlich länger verwendet werden können, bevor Sie aufgrund von Verschleiss aufwändig gewartet bzw. ausgetauscht werden müssen, wodurch letztlich die Kosten für den Betrieb des Motors merklich gesenkt werden können.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit ein Verfahren zur Rekonditionierung einer Zylinderanordnung einer Hubkolbenbrennkraftmaschine, insbesondere längsgespülter Zweitakt-Grossdieselmotor. Die Zylinderanordnung umfasst dabei einen in einem Zylinderliner anordenbaren Kolben, der im Betriebs- und Einbauzustand zwischen einem oberen Totpunkt und einem unteren Totpunkt derart entlang einer Zylinderachse des Zylinderliners hin- und herbewegbar angeordnet ist, dass eine Oberseite des Kolbens zusammen mit einer Lauffläche des Zylinderliners und einem am Zylinderliner angeordneten Zylinderdeckel einen Brennraum begrenzt. Dabei ist an einer Kolbenkrone des Kolbens zwischen der Oberseite des Kolbens und einer dem Brennraum abgewandten Unterseite des Kolbens ein mindestens einen Kolbenring umfassendes Kolbenringpaket vorgesehen, so dass der Kolben im Betriebszustand über das Kolbenringpaket in reibendem Kontakt mit der Lauffläche des Zylinderliners steht. Erfindungsgemäss wird bei einem vorgegebenen Verschleisszustand eines an den Zylinderdeckel angrenzenden Topbereichs der Lauffläche, der Kolben in einem Haupt-Rekonditionierungsschritt derart rekonditioniert, dass mindestens ein der Oberseite des Kolbens am nächsten angeordneter Topring des Kolbenringpakets nach der Rekonditionierung des Kolbens um einen vorgegebenen ersten Differenzabstand weiter von der Oberseite des Kolbens beabstandet ist als vor der Rekonditionierung.

Wesentlich für das erfindungsgemässe Verfahren ist dabei, dass bei einem vorgegebenen Verschleisszustand eines an den Zylinderdeckel angrenzenden Topbereichs der Lauffläche, der Kolben in einem Haupt-Rekonditionierungsschritt derart rekonditioniert wird, dass mindestens ein der Oberseite des Kolbens am nächsten angeordneter Topring des Kolbenringpakets nach der Rekonditionierung des Kolbens um einen vorgegebenen ersten Differenzabstand weiter von der Oberseite des Kolbens beabstandet ist als vor der Rekonditionierung. D.h., wenn bei dem vorgegebenen Verschleisszustand die "trompetennartige" Abnutzung des Zylinderliners so stark ausgeprägt ist, dass sie aus den eingangs beschriebenen Gründen nicht mehr tolerierbar ist, wird zumindest der dem Brennraum am nächsten zugewandte Topring neu platziert, und zwar weiter entfernt von der Kolbenoberfläche. Das hat zur Folge, dass der Topring nach der Neuplatzierung, wenn er sich in der Nähe des oberen Totpunkts befindet, nunmehr wieder mit einem inneren Durchmesser des Zylinderliners in Berührung kommt, der weniger weit reduziert ist, so dass der Topring den Brennraum wieder ausreichend in Richtung zur Unterseite des Kolbens abdichtet, und zudem eine weitere Abnutzung der Zylinderlauffläche im Bereich oberhalb des neu platzierten Toprings verhindert wird.

Erfindungsgemäß umfasst das Kolbenringpaket zusätzlich zum Topring, der in einer Topringnute angeordnet ist, mindestens einen zweiten Kolbenring und zur Rekonditionierung des Kolbens wird der Topring aus der Topringnute entfernt und zumindest zunächst nicht ersetzt. In solchen Fällen kann die offen gebliebene Kolbenringnute unter anderem als Sammelnute für Kohlerückstände, Abrieb oder sogar als Sammelnute für Schmieröl vorteilhaft wirken.

Dabei kann der Topring zur Rekonditionierung des Kolbens aus der Topringnute entfernt werden, und im ersten Differenzabstand in einer zweiten Position neu installiert werden, wobei die Topringnute im Speziellen, aber nicht notwendig, verschlossen, bevorzugt zugeschweisst wird.

Dabei kann in Abhängigkeit vom Abnutzungsgrad der Kolbenkrone insgesamt, die Kolbenkrone durch eine Austauschkrone auch vollständig ersetzt werden, bei welcher Austauschkrone mindestens ein der Oberseite der Austauschkrone am nächsten angeordneter Topring des Kolbenringpakets der Austauschkrone um den vorgegebenen Differenzabstand weiter von der Oberseite der Austauschkrone beabstandet ist.

Es versteht sich dabei von selbst, dass vorteilhaft auch mindestens ein weiterer Kolbenring des Kolbenringpakets, im Speziellen jeder Kolbenring des Kolbenringpakets nach der Rekonditionierung des Kolbens um einen zweiten vorgegebenen Differenzabstand weiter von der Oberseite des Kolbens beabstandet sein kann als vor der Rekonditionierung, wobei alle zweiten Differenzabstände gleich oder verschieden sein können, und im Speziellen auch gleich dem Differenzabstand sein können.

Dabei muss bei einem erfindungsgemässen Rekonditionierungsverfahren der Topring selbstverständlich nicht bereits in einem ersten Verfahrensschritt ausgetauscht oder versetzt werden, sondern es ist auch möglich, dass in mindestens einem Zwischenschritt mindestens ein Kolbenring des Kolbenringpakets ausgetauscht wird, bevor der Haupt-Rekonditionierungsschritt durchgeführt wird, wobei es insbesondere vorteilhaft sein kann, dass mindestens ein Kolbenring beim Haupt-Rekonditionierungsschritt oder beim Zwischenschritt durch einen neuen Kolbenring ersetzt wird.

Dabei ist es natürlich möglich, dass auch ein der Unterseite des Kolbens am nächsten zugewandter Kolbenring des Kolbenringpakets entfernt wird und nicht ersetzt wird.

Auch können die Kolbenringe durch Kolbenringe anderer Geometrie oder mit anderen Eigenschaften ersetzt werden, um besser an den fortgeschrittenen Verschleisszustand des Zylinderliners angepasst zu sein. So ist es z.B. möglich, dass ein Kolbenring durch einen Kolbenring anderer Höhe, oder dass ein Kolbenring durch einen Kolbenring anderer Breite ersetzt wird. Auch kann ein Kolbenring durch einen Kolbenring mit einem anderen Aussendurchmesser, insbesondere durch einen Kolbenring mit einem grösseren Aussendurchmesser ersetzt werden, oder es kann selbstverständlich auch eine Breite oder eine Tiefe einer Kolbenringnute verändert werden, wobei eine Kolbenringnute, oder die Kolbenkrone, oder ein Kolbering oder eine andere Komponente auch bei der Rekonditionierung mit einer Verschleissschutzschicht versehen werden kann, wie es an sich im Stand der Technik bekannt ist.

In einem für die Praxis besonders bevorzugten Ausführungsbeispiel, das beispielsweise bei einem grossbohrigen längsgespülten Zweitakt-Grossdieselmotor sehr vorteilhaft angewendet werden kann, wird nach einem ersten festgelegten Wartungsinterval, beispielweise nach 16.000 bis 18.000 Betriebsstunden, zunächst ein unterer, dem Brennraum am entferntesten angeordneter Kolbenring aus dem Kolbenringpaket entfernt, das ursprünglich z.B. vier Kolbenringe umfasst. In diesem ersten Wartungsschritt werden dann nur die drei oberen Kolbenringe durch neue ersetzt. Die Kolbenringnut des untersten Kolbenrings, der aus dem Kolbenringpaket entfernt wurde, bleibt leer. Die leer gebliebene Nut kann dabei zugeschweisst werden, wird bevorzugt aber einfach offen gelassen und der Motor mit nur drei Kolbenringen im Kolbenringpaket weiter betrieben.

Nach einer festgelegten Anzahl weiterer Betriebsstunden, beispielweise nach weiteren 16.000 bis 20.000 Betriebsstunden, wird der Kolben wieder gewartet und die verbliebenen drei Kolbenringe wieder durch neue Kolbenringe ersetzt, wobei bevorzugt jetzt die leer gebliebene Kolbenringnute des ursprünglich entfernten vierten Kolbenrings verschlossen wird, beispielsweise durch zuschweissen.

Nach einer weiterer Anzahl von Betriebsstunden ist der eingangs beschriebene z.B. "trompetenartige" Verschleiss der Lauffläche des Zylinderliners so stark ausgeprägt, dass mindestens der der Oberseite des Kolbens am nächsten angeordnete Topring des Kolbenringpakets nach der Rekonditionierung des Kolbens um einen vorgegebenen ersten Differenzabstand weiter von der Oberseite des Kolbens beabstandet wird als vor der Rekonditionierung. D.h., zumindest der Topring wird in Bezug auf die Kolbenoberfläche um den Differenzabstand von der Kolbenoberfläche weiter weg versetzt. Es versteht sich dabei, dass je nach Art der Abnutzung auch weitere oder alle Kolbenring des Kolbenringpakets entsprechend weiter beabstandet von der Kolbenoberfläche neu platziert werden können, wobei der neue Abstand von der Kolbenoberfläche für jeden Kolbenring des Kolbenringpakets selbstverständlich individuell gewählt werden kann.

Bei einem der erfindungsgemässen Rekonditionierungsverfahren können selbstverständlich auch alle an sich bekannten Massnahmen zur Rekonditionierung eines Kolbens, der Kolbenringe oder des Zylinderliners ebenfalls zur Anwendung kommen.

So kann, wie bereits erwähnt, eine Kolbenringnute zugeschweisst oder je nach Anforderung eben nicht zugeschweisst werden. Die Kolbenoberfläche, der Kolbenring oder die Kolbenringnute können mechanisch bearbeitet, z.B. geschliffen, poliert oder sonst wie mechanisch bearbeitet werden.

Die beteiligten Komponenten wie Kolben, Kolbenringe, Kolbenringnuten oder andere Maschinenkomponenten können ganz oder teilweise ersetzt bzw. neu geschaffen werden, oder zum Beispiel auch mit an sich bekannten Beschichtungen, z.B. mit galvanischen Schichten oder mit thermischen Spritzschichten versehen werden, beispielweise um die Reibung zu reduzieren oder die Dichteigenschaften anzupassen oder zu optimieren oder um Parameter wie die Rauhigkeit anzupassen.

Der Fachmann versteht dabei sofort, dass die Erfindung nicht auf die exemplarisch erläuterten Ausführungsbeispiele beschränkt ist, sondern dass auch einfache Weiterbildungen und insbesondere auch alle technisch sinnvollen Kombinationen der Ausführungsbeispiele durch die Erfindung abgedeckt sind. Ausserdem versteht es sich von selbst, dass die Anwendung der Erfindung nicht auf Zweitakt Grossdieselmotoren beschränkt ist, sondern prinzipiell bei jedem anderen Motorentyp, z.B. auch bei Gasmotoren, Viertakt Motoren oder anderen Motoren zur Anwendung kommen kann.

## Patentansprüche

1. Verfahren zur Rekonditionierung einer Zylinderanordnung einer Hubkolbenbrennkraftmaschine, insbesondere längsgespülter Zweitakt-Grossdieselmotor, welche Zylinderanordnung einen in einem Zylinderliner anordenbaren Kolben umfasst, der im Betriebs- und Einbauzustand zwischen einem oberen Totpunkt und einem unteren Totpunkt derart entlang einer Zylinderachse des Zylinderliners hin- und herbewegbar angeordnet ist, dass eine Oberseite des Kolbens zusammen mit einer Lauffläche des Zylinderliners und einem am Zylinderliner angeordneten Zylinderdeckel einen Brannraum begrenzt, wobei an einer Kolbenkrone des Kolbens zwischen der Oberseite des Kolbens und einer dem Brennraum abgewandten Unterseite des Kolbens ein mindestens einen Kolbenring umfassendes Kolbenringpakets vorgesehen ist, so dass der Kolben im Betriebszustand über das Kolbenringpakets in reibendem Kontakt mit der Lauffläche des Zylinderliners steht, und bei einem vorgegebenen Verschleisszustand eines an den Zylinderdeckel angrenzenden Topbereichs der Lauffläche, der Kolben in einem Haupt-Rekonditionierungsschritt derart rekonditioniert wird, dass mindestens ein der Oberseite des Kolbens am nächsten angeordneter Topring des Kolbenringpakets, nach der Rekonditionierung des Kolbens um einen vorgegebenen ersten Differenzabstand weiter von der Oberseite des Kolbens beabstandet ist als vor der Rekonditionierung, dadurch gekennnzeichnet, dass das Kolbenringpaket zusätzlich zum Topring, der in einer Topringnute angeordnet ist, mindestens einen zweiten Kolbenring umfasst, und zur Rekonditionierung des Kolbens der Topring aus der Topringnute entfernt wird und nicht ersetzt wird.

2. Verfahren nach Anspruch 1, wobei der Topring zur Rekonditionierung des Kolbens aus der Topringnute entfernt wird, und im ersten Differenzabstand in einer zweiten Position neu installiert wird.

3. Verfahren nach einem der Ansprüche 1 oder 2, wobei die Topringnute verschlossen, bevorzugt zugeschweisst wird.

4. Verfahren nach einem der vorangehenden Ansprüche, wobei die Kolbenkrone durch eine Austauschkrone ersetzt wird, bei weicher mindestens ein der Oberseite der Austauschkrone am nächsten angeordneter Topring des Kolbenringpakets der Austauschkrone, um den vorgegebenen Differenzabstand weiter von der Oberseite der Austauschkrone beabstandet ist.

5. Verfahren nach einem der vorangehenden Ansprüche, wobei mindestens ein weiterer Kolbenring des Kolbenringpakets, im Speziellen jeder Kolbenring des Kolbenringpakets nach der Rekonditionierung des Kolbens um einen zweiten vorgegebenen Differenzabstand weiter von der Oberseite des Kolbens beabstandet ist als vor der Rekonditionierung.

6. Verfahren nach Anspruch 5, wobei alle zweiten Differenzabstände gleich sind, und im Speziellen gleich dem Differenzabstand sind.

7. Verfahren nach einem der vorangehenden Ansprüche, wobei in mindestens einem Zwischenschritt mindestens ein Kolbenring des Kolbenringpakets ausgetauscht wird, bevor der Haupt-Rekonditionierungsschritt durchgeführt wird.

8. Verfahren nach einem der vorangehenden Ansprüche, wobei mindestens ein Kolbenring beim Haupt-Rekonditionierungsschritt oder beim Zwischenschritt durch einen neuen Kolbenring ersetzt wird.

9. Verfahren nach einem der vorangehenden Ansprüche, wobei ein der Unterseite des Kolbens am nächsten zugewandter Kolbenring des Kolbenringpakets entfernt wird und nicht ersetzt wird.

10. Verfahren nach einem der vorangehenden Ansprüche, wobei ein Kolbenring durch einen Kolbenring anderer Höhe ersetzt wird.

11. Verfahren nach einem der vorangehenden Ansprüche, wobei ein.
Kolbenring durch einen Kolbenring anderer Breite ersetzt wird.

12. Verfahren nach einem der vorangehenden Ansprüche, wobei ein Kolbenring durch einen Kolbenring mit einem anderen Aussendurchmesser, insbesondere durch einen Kolbenring mit einem grösseren Aussendurchmesser ersetzt wird.

13. Verfahren nach einem der vorangehenden Ansprüche, wobei eine Breite oder eine Tiefe einer Kolbenringnute verändert wird.

14. Verfahren nach einem der vorangehenden Ansprüche, wobei eine Kolbenringnute, oder die Kolbenkrone, oder ein Kolbering mit einer Verschleissschutzschicht versehen wird,

## Claims

1. A method for the reconditioning of a cylinder arrangement of a reciprocating piston internal combustion engine, in particular a uniflow scavenged large two-stroke diesel engine, the cylinder arrangement including a piston which can be arranged in a cylinder liner, the piston being moveable to and fro between a top dead center and a bottom dead center along a cylinder axis of the cylinder liner in the operating state and installation state, such that an upper side of the piston bounds a combustion space together with a running surface of the cylinder liner and a cylinder cover arranged at the cylinder liner, wherein a piston ring package including at least one piston ring is provided at a piston crown of the piston between the upper side of the piston and a lower side of the piston remote from the combustion space, so that the piston is in frictional contact with the running surface of the cylinder liner via the piston ring package in the operating state, and the piston is reconditioned in a main reconditioning step at a predefined state of wear of a top region of the running surface adjacent to the cylinder cover, such that at least one top ring of the piston ring package arranged closest to the upper side of the piston is spaced further away from the upper side of the piston by a predefined first difference spacing after the reconditioning of the piston than before to the reconditioning, **characterized in that** the piston ring package includes at least one second piston ring in addition to the top ring which is arranged in a top ring groove and the top ring is removed from the top ring groove and is not replaced for the reconditioning of the piston.

2. A method in accordance with claim 1 wherein the top ring is removed from the top ring groove for the reconditioning of the piston and is newly installed at a first difference spacing in a second position.

3. A method in accordance with one of the claims 1 or 2, wherein the top ring groove is closed, is preferably welded shut.

4. A method in accordance with any one of the preceding claims,
wherein the piston crown is replaced by an exchange crown, in which at least one top ring of the piston ring package of the exchange crown arranged closest to the upper side of the exchange crown is spaced further away from the upper side of the exchange crown by the predefined difference spacing.

5. A method in accordance with any one of the preceding claims,
wherein at least one further piston ring of the piston ring package, in particular each piston ring of the piston ring package, is spaced further away from the upper side of the piston by a second predefined difference spacing after the reconditioning of the piston than before to the reconditioning.

6. A method in accordance with claim 6, wherein all second difference spacings are equal and in particular are equal to the difference spacing.

7. A method in accordance with any one of the preceding claims,
wherein at least one piston ring of the piston ring package is exchanged in at least one intermediate step before the main reconditioning step is carried out.

8. A method in accordance with any one of the preceding claims,
wherein at least one piston ring is replaced by a new piston ring during the main reconditioning step or during the intermediate step.

9. A method in accordance with any one of the preceding claims,
wherein a piston ring of the piston ring package facing closest to the lower side of the piston is removed and is not replaced.

10. A method in accordance with any one of the preceding claims,
wherein a piston ring is replaced by a piston ring of different height.

11. A method in accordance with any one of the preceding claims,
wherein a piston ring is replaced by a piston ring of different width.

12. A method in accordance with any one of the preceding claims,
wherein a piston ring is replaced by a piston ring having a different outer diameter, in particular by a piston ring having a larger outer diameter.

13. A method in accordance with any one of the preceding claims,
wherein a width of a piston ring groove or a depth of a piston ring groove is changed.

14. A method in accordance with any one of the preceding claims,
wherein a piston ring groove or the piston crown or a piston ring are provided with a wear protection layer.

## Revendications

1. Procédé pour reconditionner un agencement de cylindre d'un moteur à combustion interne à piston alternatif, en particulier un grand moteur Diesel à deux temps purgé, lequel agencement de cylindre présente un piston pouvant être disposé dans une chemise de cylindre qui est agencé pouvant se déplacer en va-et-vient, dans l'état de fonctionnement et dans l'état monté, entre un point mort haut et un point mort bas le long d'une axe de cylindre de la chemise de cylindre, en ce qu'une partie supérieure du piston délimite une chambre de combustion conjointement avec une bande de la chemise de cylindre et un couvercle de cylindre disposé sur la chemise de cylindre, dans lequel est prévu un ensemble de segments de piston comprenant au moins un segment de piston au niveau d'une couronne de piston du piston entre la partie supérieure du piston et une partie inférieure du piston à l'opposé de la chambre de combustion, de sorte que le piston, dans l'état de fonctionnement, est en contact de friction avec la bande de la chemise de cylindre sur l'ensemble de segments de piston, et dans un état d'usure donné d'une zone supérieure attenante au couvercle de cylindre de la bande de roulement, le piston va être reconditionné lors d'une étape de reconditionnement principale, de sorte qu'au moins un segment supérieur de l'ensemble de segments de piston agencé à la suite de la partie supérieure du piston, après le reconditionnement du piston, est espacé davantage de la partie supérieure du piston d'une première distance d'espacement donnée qu'avant le reconditionnement, caractérisé en ce l'ensemble de segments de piston, en plus du segment supérieur agencé dans une rainure de segment supérieur, présente au moins un second segment de piston, et pour le reconditionnement du piston, le segment supérieur va être retiré de la rainure de segment supérieur, et ne va pas être remplacé.

2. Procédé selon la revendication 1, dans lequel pour le reconditionnement du piston, le segment supérieur va être retiré de la rainure de segment supérieur, et réinstallé dans une deuxième position à la première distance d'espacement.

3. Procédé selon les revendications 1 ou 2, dans lequel la rainure de segment supérieur va être fermée, de préférence soudée.

4. Procédé selon l'une quelconque des revendications précédentes, dans lequel la couronne de piston est remplacée par une couronne de remplacement, de sorte qu'au moins un segment supérieur de l'ensemble de segments de piston agencé à la suite de la partie supérieure de la couronne de remplacement est plus espacé de la partie supérieure de la couronne de remplacement d'une distance d'espacement donnée.

5. Procédé selon l'une quelconque des revendications précédentes, dans lequel au moins un autre segment de piston de l'ensemble de segments de piston, en particulier chaque segment de piston de l'ensemble de segments de piston, après le reconditionnement du piston, est plus espacé de la partie supérieure du piston qu'avant le reconditionnement, d'une seconde distance d'espacement donnée.

6. Procédé selon la revendication 5, dans lequel toutes les secondes distances d'espacement sont égales, et en particulier égales à la distance d'espacement.

7. Procédé selon l'une quelconque des revendications précédentes, dans lequel, dans au moins une étape intermédiaire, au moins un segment de piston de l'ensemble de segments de piston est remplacé, avant le déroulement de l'étape de reconditionnement principale.

8. Procédé selon l'une quelconque des revendications précédentes, dans lequel au moins un segment de piston est remplacé par un nouveau segment de piston lors de l'étape de reconditionnement principale ou lors de l'étape intermédiaire.

9. Procédé selon l'une quelconque des revendications précédentes, dans lequel un segment de piston agencé à la suite de l'ensemble de segments de piston, faisant face à la partie inférieure du piston, va être retiré, et ne va pas être remplacé.

10. Procédé selon l'une quelconque des revendications précédentes, dans lequel un segment de piston est remplacé par un segment de piston d'une autre hauteur.

11. Procédé selon l'une quelconque des revendications précédentes, dans lequel un segment de piston est remplacé par un segment de piston d'une autre largeur.

12. Procédé selon l'une quelconque des revendications précédentes, dans lequel un segment de piston est remplacé par un segment de piston ayant un diamètre extérieur différent, notamment par un segment de piston ayant un diamètre extérieur plus grand.

13. Procédé selon l'une quelconque des revendications précédentes, dans lequel une largeur ou une profondeur d'une rainure de segment de piston de piston est modifiée.

14. Procédé selon l'une quelconque des revendications précédentes, dans lequel une rainure de segment de piston, ou la couronne de piston, ou un segment de piston est pourvu(e) d'un revêtement résistant à l'usure.
